# EUROPÄISCHE PATENTANMELDUNG

(11) **EP 3 557 048 A1**
(43) Veröffentlichungstag der Anmeldung: **23.10.2019**
(21) Anmeldenummer: 19168424.0
(22) Anmeldetag: 10.04.2019
(51) Int. Cl.: F03D 7/04

(54) **VERFAHREN UND VORRICHTUNG ZUM BETREIBEN EINER WINDENERGIEANLAGE SOWIE WINDENERGIEANLAGE**

(30) Priorität: 18.04.2018 DE 102018003168
(71) Anmelder: Senvion GmbH, 22297 Hamburg (DE)
(72) Erfinder: GEISLER, Jens, 24768 Rendsburg (DE)
(74) Vertreter: Hahner, Ralph

(57) **Zusammenfassung**

Die Erfindung betrifft eine Vorrichtung und ein Verfahren zum Betreiben einer Windenergieanlage (10-15), welche ein Regelungssystem (15) zur Einstellung mindestens einer der folgenden Regelgrößen der Windenergieanlage aufweist: Rotorblattwinkel, Generatordrehmoment, Abgabeleistung und/oder Windnachführwinkel, mit folgenden Schritten: Einlesen von Werten mindestens eines den Wind im Bereich der Windenergieanlage charakterisierenden Windparameters (v); Bestimmung einer Prognose eines oder mehrerer Werte (1) des Windparameters (v) für einen in der Zukunft liegenden Zeitraum basierend auf den eingelesenen Werten des Windparameters (v); Validierung und/oder Änderung mindestens eines der prognostizierten Werte (1) des Windparameters (v); und Ermitteln mindestens eines Sollwertes mindestens einer der Regelgrößen basierend auf dem mindesten einen validierten und/oder geänderten prognostizierten Wert (2) des Windparameters (v). Die Erfindung betrifft ferner eine entsprechende Windenergieanlage.

## Beschreibung

Die Erfindung betrifft ein Verfahren und eine Vorrichtung zum Betreiben einer Windenergieanlage sowie eine Windenergieanlage.

Es sind Windenergieanlagen bekannt, bei welchen während des Betriebs verschiedene Regelgrößen, wie etwa der Rotorblattwinkel und/oder der Windnachführwinkel, an die jeweiligen Windverhältnisse angepasst werden. Die Regelgrößen bzw. zugehörigen Sollwerte können beispielsweise auf Basis von gemessenen und/oder prognostizierten Windgeschwindigkeitswerten ermittelt werden. Letzteres macht eine möglichst zuverlässige Prognose der Windverhältnisse wünschenswert.

Es ist eine Aufgabe der Erfindung, ein Verfahren und eine Vorrichtung zum Betreiben einer Windenergieanlage sowie eine Windenergieanlage anzugeben, welches bzw. welche die Ermittlung und/oder Einstellung mindestens einer Regelgröße der Windenergieanlage auf der Basis einer möglichst zuverlässigen Prognose der Windverhältnisse ermöglicht.

Diese Aufgabe wird durch das Verfahren, die Vorrichtung und die Windenergieanlage gemäß den unabhängigen Ansprüchen gelöst.

Gemäß einem ersten Aspekt der Erfindung weist das Verfahren zum Betreiben einer Windenergieanlage, welche ein Regelungssystem zur Einstellung mindestens einer der folgenden Regelgrößen der Windenergieanlage aufweist: Rotorblattwinkel, Generatordrehmoment, Abgabeleistung und/oder Windnachführwinkel, folgende Schritte auf: Einlesen von Werten mindestens eines den Wind im Bereich der Windenergieanlage charakterisierenden Windparameters; Bestimmung einer Prognose eines oder mehrerer Werte des Windparameters für einen in der Zukunft liegenden Zeitraum basierend auf den eingelesenen Werten des Windparameters; Validierung und/oder Änderung mindestens eines der prognostizierten Werte des Windparameters; Ermitteln mindestens eines Sollwertes mindestens einer der Regelgrößen basierend auf dem mindesten einen validierten und/oder geänderten prognostizierten Wert des Windparameters.

Gemäß einem zweiten Aspekt der Erfindung weist die Vorrichtung zum Betreiben einer Windenergieanlage, welche ein Regelungssystem zur Einstellung mindestens einer der folgenden Regelgrößen der Windenergieanlage aufweist: Rotorblattwinkel, Generatordrehmoment, Abgabeleistung und/oder Windnachführwinkel, mindestens eine Ermittlungseinrichtung auf, welche zur Durchführung folgender Schritte eingerichtet ist: Einlesen von Werten mindestens eines den Wind im Bereich der Windenergieanlage charakterisierenden Windparameters; Bestimmung einer Prognose eines oder mehrerer Werte des Windparameters für einen in der Zukunft liegenden Zeitraum basierend auf den eingelesenen Werten des Windparameters; Validierung und/oder Änderung mindestens eines der prognostizierten Werte des Windparameters; Ermitteln mindestens eines Sollwertes mindestens einer der Regelgrößen basierend auf dem mindesten einen validierten und/oder geänderten prognostizierten Wert des Windparameters.

Gemäß einem dritten Aspekt der Erfindung weist die Windenergieanlage auf: mehrere Rotorblätter, eine Gondel und einen Generator, eine Vorrichtung gemäß dem zweiten Aspekt der Erfindung sowie ein Regelungssystem, welches dazu eingerichtet ist, mindestens eine der folgenden Regelgrößen basierend auf dem ermittelten Sollwert einzustellen: einen Rotorblattwinkel mindestens eines der Rotorblätter, ein Drehmoment des Generators, eine vom Generator abgegebene Leistung und/oder einen Windnachführwinkel der Gondel.

Bevorzugte Aspekte der Erfindung basieren auf dem Ansatz, einen oder mehrere Werte eines den Wind im Bereich der Windenergieanlage charakterisierenden Windparameters, insbesondere die Windgeschwindigkeit, auf der Basis von aktuellen und/oder früheren Werten des Windparameters zu prognostizieren und den bzw. die prognostizierten Werte des Windparameters einer Validierung zu unterziehen, bei welcher zumindest ein Teil der prognostizierten Werte anhand mindestens eines vorgegebenen Kriteriums geprüft und/oder geändert wird. Die prognostizierten Werte des Windparameters können dabei beispielsweise auf ihre Plausibilität hin geprüft werden, indem etwa geprüft wird, ob diese in einem sinnvollen Wertebereich liegen und/oder ihr zeitlicher Verlauf innerhalb eines Bereichs einer zu erwartenden zeitlichen Änderung dieser Werte liegt. Insbesondere können dadurch "Ausreißer" unter den prognostizierten Werten identifiziert und eliminiert bzw. so geändert werden, dass diese das jeweils angelegte Kriterium erfüllen. Durch die Validierung bzw. Änderung der prognostizierten Werte anhand vorgegebener Kriterien bzw. Regeln werden diese sozusagen "gesäubert". Dies ist besonders dann von Vorteil, wenn die Prognose der Werte anhand nichtdeterministischer Verfahren, beispielsweise mittels neuronaler Netze und/oder selbstlernender Systeme, erfolgt und die anschließende Validierung dagegen anhand deterministischer Regeln erfolgt. Dies gilt insbesondere dann, wenn bei dem verwendeten Prognoseverfahren die Ermittlung unerwartet hoher und/oder kleiner Werte bzw. zeitlicher Änderungen der Werte nicht zuverlässig ausgeschlossen werden kann. Auf der Basis von auf diese Weise validierten und/oder "gesäuberten" prognostizierten Werten des Windparameters wird dann mindestens ein Sollwert der betreffenden Regelgröße ermittelt bzw. die Regelgröße entsprechend eingestellt.

Insgesamt erlaubt damit die Erfindung die Ermittlung bzw. Einstellung mindestens einer Regelgröße der Windenergieanlage auf der Basis einer zuverlässigeren Prognose der Windverhältnisse.

Der den Wind im Bereich der Windenergieanlage charakterisierende Windparameter, beispielsweise die Windgeschwindigkeit, kann beispielsweise mittels eines Windmessers direkt bestimmt werden. Alternativ oder zusätzlich ist es aber auch möglich, den Windparameter, insbesondere die Windgeschwindigkeit, anhand einer oder mehrerer Betriebsgrößen der Windenergieanlage zu bestimmen, insbesondere zu schätzen. Beispielsweise werden dazu eine oder mehrere der folgenden Betriebsgrößen erfasst und daraus eine Windgeschwindigkeit abgeleitet: Die von einem Generator der Windenergieanlage abgegebene Leistung, die Drehzahl der Rotorblätter und/oder des Generators und/oder der Rotorblattwinkel. In diesem Falle basiert die Prognose eines oder mehrerer Werte des Windparameters entsprechend auf den auf diese Weise ermittelten bzw. geschätzten Werten des Windparameters.

Eine Validierung und gegebenenfalls Änderung mindestens eines der prognostizierten Werte des Windparameters bedeutet nicht notwendigerweise, dass die prognostizierten Werte auf "Richtigkeit" überprüft und gegebenenfalls geändert werden. Vielmehr dient die Validierung und gegebenenfalls Änderung der prognostizierten Werte des Windparameters im Sinne der Erfindung vorzugsweise dazu, einer gegebenenfalls nichtdeterministischen Prognose, welche beispielsweise mittels eines neuronalen Netzwerks vorgenommen wurde, deterministisch verlässliche Eigenschaften zu verleihen, indem beispielsweise extreme Werte in der Prognose, wie etwa sogenannte Ausreißer, begrenzt werden, so dass das nachgeschaltete Regelungssystem auf der Basis der entsprechend gesäuberten Prognose ein akzeptables Regelungsverhalten zeigt.

Beim Ermitteln des mindestens einen Sollwertes mindestens einer der Regelgrößen kann ein Sollwert der Regelgröße im engeren regelungstechnischen Sinne ermittelt werden, welcher dem gewünschten Wert der einzustellenden Regelgröße entspricht und mit Hilfe des Regelungssystems der Windenergieanlage eingestellt wird. Im Sinne der vorliegenden Erfindung umfasst das Ermitteln des mindestens einen Sollwertes mindestens einer der Regelgrößen und/oder die Einstellung der jeweiligen Regelgröße basierend auf dem Sollwert jegliche Funktionalität im Zusammenhang mit einer Veränderung bzw. Einstellung der betreffenden Regelgröße, auch zum Beispiel mittels einer sogenannten Vorsteuerung, durch welche die betreffende Regelgröße mit einem entsprechenden Wert beaufschlagt wird, welcher unabhängig von den Zuständen der Regelstrecke und daraus resultierenden Messungen ist.

Vorzugsweise charakterisieren die eingelesenen Werte des Windparameters den Wind im Bereich der Windenergieanlage in einem in der Vergangenheit liegenden und bis an die Gegenwart reichenden Zeitraum, welcher etwa 10 bis 120 Sekunden, vorzugsweise etwa 20 bis 100 Sekunden lang ist. Der Zeitraum kann aber auch kürzer als 10 Sekunden oder länger als 120 Sekunden sein. Vorzugsweise haben die eingelesenen Werte einen zeitlichen Abstand voneinander, welcher zwischen 0,1 und 2 Sekunden, insbesondere etwa 1 Sekunde, beträgt. Dadurch wird die der Prognose zugrunde gelegte Datenmenge an Werten des Windparameters begrenzt, ohne die Qualität der Prognose signifikant zu beeinträchtigen.

Vorzugsweise wird die Prognose der Werte des Windparameters für einen in der Zukunft liegenden Zeitraum vorgenommen, welcher zwischen etwa 5 und 60 Sekunden, insbesondere etwa 15 Sekunden, lang ist. Vorzugsweise haben die prognostizierten Werte einen zeitlichen Abstand voneinander, welcher zwischen 0,1 und 2 Sekunden, insbesondere etwa 1 Sekunde, beträgt. Dadurch kann bei begrenztem Rechenaufwand eine gute Qualität der prognostizierten Werte erreicht werden.

Vorzugsweise erfolgt die Bestimmung der Prognose der Werte des Windparameters mittels eines, insbesondere künstlichen, neuronalen Netzwerks (NN). Vorzugsweise wird das neuronale Netzwerk mittels eines, insbesondere separaten, Lernverfahrens auf der Basis von Werten des Windparameters für mindestens einen in der Vergangenheit liegenden Zeitraum konfiguriert. Die Prognose von Werten des Windparameters beruht dadurch auf Regeln, welche anhand von Werten aus der Vergangenheit, insbesondere von vor der Prognose erfassten bzw. geschätzten Werten des Windparameters, gelernt werden bzw. wurden. Vorzugsweise wird das neuronale Netzwerk anhand von Werten des Windparameters konfiguriert, welche vorzugsweise über mehrere Wochen, insbesondere auch über einige Monate oder ein vollständiges Jahr, gewonnen, insbesondere gemessen und/oder anhand von Betriebsparametern der Windenergieanlange geschätzt wurden. Dadurch können gute Prognosen der Werte des Windparameters erreicht werden, wodurch eine anderweitige Bestimmung der zu erwartenden Werte, etwa auf der Basis von LIDAR-Messungen, entfallen kann oder in vorteilhafter Weise ergänzt wird.

Alternativ oder zusätzlich kann das neuronale Netzwerk aber auch im laufenden Betrieb der Windenergieanlage, insbesondere nach der Prognose und/oder Validierung und ggf. Änderung, mittels eines Lernverfahrens konfiguriert bzw. weiter trainiert werden, indem alternativ bzw. zusätzlich zu Werten des Windparameters aus der Vergangenheit auch Werte des Windparameters berücksichtigt werden, die während des Betriebs erfasst bzw. geschätzt und/oder prognostiziert und validiert und ggf. geändert wurden. Vorzugsweise wird das, insbesondere bereits konfigurierte, neuronale Netzwerk während des laufenden Betriebs der Windenergieanlage anhand des mindestens einen validierten und/oder geänderten prognostizierten Wertes des Windparameters angepasst. Dadurch wird erreicht, dass das neuronale Netzwerk auch während des Betriebs der Anlage dazulernt, so dass die Prognose von in der Zukunft liegenden Werten des Windparameters mit der Dauer immer zuverlässiger wird bzw. sich der veränderlichen stochastischen Parameter des Windes z.B. im Tag/Nacht-Rhythmus oder im Wechsel der Jahreszeiten anpasst. Durch die nach einer Prognose jeweils erfolgende Validierung und ggf. Änderung der prognostizierten Werte, insbesondere anhand deterministischer Kriterien und/oder Regeln, wird dabei dennoch sichergestellt, dass die bei diesem adaptiven Lernprozess angepassten bzw. gewonnenen Prognoseregeln nicht zu Ausreißern bei den der Ermittlung der Sollwerte bzw. Regelgrößen zugrunde gelegten Werten des Windparameters führen.

Vorzugsweise erfolgt die Bestimmung der Prognose der Werte des Windparameters mittels einer Markov-Kette auf der Basis von Werten des Windparameters für mindestens einen in der Vergangenheit liegenden Zeitraum. Dadurch können selbst bei Kenntnis einer nur begrenzten Vorgeschichte der Werte des Windparameters gute Prognosen über die zukünftige Entwicklung der Werte erhalten werden.

Es ist ferner bevorzugt, dass die Validierung und/oder Änderung des mindestens einen der prognostizierten Werte des Windparameters durch Anwendung mindestens einer deterministischen Regel erfolgt. Dabei werden vorzugsweise nur definierte Prüfkriterien und/oder definierte Reihenfolgen der Prüfkriterien und/oder definierte Regeln bei einer etwaigen Änderung der Werte auf die prognostizierten Werte angewandt, so dass bei gleichen Eingangswerten (d.h. prognostizierten Werten) stets die gleichen Ausgabewerte (d.h. validierte und ggf. geänderte Werte) erhalten werden. Dies ist insbesondere von Vorteil, wenn die Prognose unter Verwendung eines neuronalen Netzwerks vorgenommen wird. Da neuronale Netzwerke häufig als Blackbox betrachtet werden, kann nicht immer gewährleistet werden, dass die prognostizierten Werte des Windparameters stets den in Wirklichkeit zu erwartenden Werten entsprechen. Durch die Anwendung deterministischer Regeln können unrealistische oder extreme Werte des Windparameters zuverlässig erkannt, eliminiert und/oder begrenzt werden.

Vorzugsweise erfolgt die Validierung und gegebenenfalls Änderung des mindestens einen der prognostizierten Werte des Windparameters, indem der mindestens eine prognostizierte Wert des Windparameters mit mindestens einem absoluten Grenzwert verglichen wird und, falls der prognostizierte Wert den absoluten Grenzwert überschreitet oder unterschreitet, der prognostizierte Wert geändert wird. Dadurch lassen sich die prognostizierten Werte auf ein sinnvolles und/oder realistisches Intervall begrenzen.

Alternativ oder zusätzlich kann die Validierung und gegebenenfalls Änderung des mindestens einen der prognostizierten Werte des Windparameters erfolgen, indem der mindestens eine prognostizierte Wert des Windparameters mit mindestens einem relativen Grenzwert verglichen wird, welcher sich auf einen aktuellen Wert des Windparameters oder auf einen bei einer vorherigen Prognose bestimmten und validierten und gegebenenfalls geänderten Wert des Windparameters bezieht, und, falls der prognostizierte Wert den relativen Grenzwert überschreitet oder unterschreitet, der prognostizierte Wert geändert wird. Auch hierdurch ist eine Begrenzung der prognostizierten Werte des Windparameters auf ein sinnvolles bzw. realistisches Intervall erreichbar.

Vorzugsweise erfolgt die Validierung und gegebenenfalls Änderung des mindestens einen der prognostizierten Werte des Windparameters, indem die Änderungsrate der prognostizierten Werte des Windparameters mit einer vorgegebenen Änderungsrate verglichen wird und, falls die Änderungsrate der prognostizierten Werte die vorgegebene Änderungsrate in einem Zeitfenster überschreitet, mindestens ein in dem Zeitfenster liegender prognostizierter Wert geändert wird. Auf diese Weise können zeitliche Änderungen in den prognostizierten Werten auf ein realistisches Maß begrenzt werden.

Es ist ferner bevorzugt, dass die Validierung und Änderung des mindestens einen der prognostizierten Werte des Windparameters erfolgt, indem die prognostizierten Werte des Windparameters einer Glättung und/oder Filterung unterzogen werden. Eine Glättung der Werte kann z.B. durch gleitende Mittelwertbildung erfolgen, wodurch höherfrequente Anteile im zeitlichen Verlauf der Werte eliminiert werden, was alternativ oder zusätzlich aber auch durch eine Tiefpassfilterung erreicht werden kann. Eine Filterung der prognostizierten Werte kann z.B. aber auch durch Fourier-Transformation des zeitlichen Verlaufs der Werte, anschließende Eliminierung bestimmter, insbesondere höherer, Frequenzanteile und Rücktransformation erreicht werden. Alternativ oder zusätzlich können auch sog. LTI-Filter, wie etwa Rechteck-, Sinc- oder Gaußfilter oder eine exponentielle Glättung, verwendet werden. Dadurch können etwaige zeitliche Schwankungen der prognostizierten Werte auf ein sinnvolles bzw. realistisches Maß begrenzt werden.

Vorzugsweise erfolgt die Validierung und gegebenenfalls Änderung des mindestens einen der prognostizierten Werte des Windparameters, indem die für einen ersten Zeitraum prognostizierten ersten Werte des Windparameters mit einem Teil der für einen zweiten Zeitraum, welcher vor dem ersten Zeitraum beginnt und mit dem ersten Zeitraum teilweise überlappt, prognostizierten und gegebenenfalls validierten bzw. geänderten zweiten Werte verglichen werden und, falls einer der ersten Werte eine Abweichung vom entsprechenden zweiten Wert aufweist, welche größer ist als eine vorgegebene Abweichung, der erste Wert geändert wird. Auf diese Weise können Werte aus der aktuellen Prognose mit korrespondierenden Werten aus einer, insbesondere unmittelbar, vorausgegangenen Prognose verglichen bzw. abgeglichen und ggf. entsprechend geändert bzw. begrenzt werden.

Es ist ferner bevorzugt, dass die Validierung und Änderung des mindestens einen der prognostizierten Werte des Windparameters erfolgt, indem die für den Zeitraum prognostizierten Werte des Windparameters so geändert werden, dass der am Anfang des Zeitraums liegende geänderte Wert des Windparameters im Wesentlichen dem aktuell eingelesenen Wert des Windparameters entspricht. Auf diese Weise werden die prognostizierten Werte einfach und zuverlässig an die aktuell vorherrschenden Windverhältnisse angepasst, so dass das Auftreten von Ausreißern bei den entsprechend angepassten Werten weniger wahrscheinlich ist.

Vorzugsweise erfolgt die Validierung und Änderung des mindestens einen der prognostizierten Werte des Windparameters, indem die für den Zeitraum prognostizierten Werte des Windparameters so geändert werden, dass der Gradient des zeitlichen Verlaufs der geänderten Werte des Windparameters am Anfang des Zeitraums im Wesentlichen dem Gradienten des zeitlichen Verlaufs zumindest eines Teils der eingelesenen Werte, welche den aktuell eingelesenen Wert des Windparameters enthalten, entspricht. Auch hierdurch werden die prognostizierten Werte einfach und zuverlässig an die aktuell vorherrschenden Windverhältnisse angepasst, so dass das Auftreten von sog. Ausreißern bei den entsprechend angepassten Werten weniger wahrscheinlich ist.

Es ist ferner bevorzugt, dass der mindestens eine Sollwert mittels eines modellprädiktiven Reglers (MPC) ermittelt wird. Bei einer modell-prädiktiven Regelung wird ein zeitdiskretes dynamisches Modell der zu regelnden Prozesse der Windenergieanlage verwendet, um das zukünftige Verhalten der Prozesse in Abhängigkeit von Eingangssignalen, insbesondere dem mindestens einen Windparameter, zu berechnen. Dabei wird vorzugsweise für jeden Abtastschritt des Windparameters eine Simulation in die Zukunft durchgeführt, bei der die Regelgrößen bzw. die entsprechenden Sollwerte durch einen Optimierungsalgorithmus so gewählt werden, dass aus dem Simulationsergebnis abgeleitete Gütemaße einen optimalen Wert annehmen. Da bei der Simulation des Verhaltens der Windenergieanlage der Wind, der während der Simulationszeit wirkt, eine entscheidende Rolle spielt, ermöglicht die Verwendung der prognostizierten und/oder geänderten bzw. begrenzten Werte des Windparameters eine besonders zuverlässige und einfache Simulation des Verhaltens der Windenergieanlage, insbesondere auch ohne Windmessungen mittels LIDAR, und damit eine entsprechend zuverlässige und einfache Regelung mittels MPC.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel einer Windenergieanlage mit einer Vorrichtung zum Betreiben der Windenergieanlage;
- Fig. 2: ein erstes Beispiel von prognostizierten Werten des Windparameters vor und nach einer Validierung bzw. Änderung der Werte;
- Fig. 3: ein zweites Beispiel von prognostizierten Werten des Windparameters vor und nach einer Validierung bzw. Änderung der Werte;
- Fig. 4: ein drittes Beispiel von prognostizierten Werten des Windparameters vor und nach einer Validierung bzw. Änderung der Werte;
- Fig. 5: ein viertes Beispiel von prognostizierten Werten des Windparameters vor und nach einer Validierung bzw. Änderung der Werte;
- Fig. 6: ein fünftes Beispiel von prognostizierten Werten des Windparameters vor und nach einer Validierung bzw. Änderung der Werte;
- Fig. 7: ein sechstes Beispiel von prognostizierten Werten des Windparameters vor und nach einer Validierung bzw. Änderung der Werte; und
- Fig. 8: ein siebtes Beispiel von prognostizierten Werten des Windparameters vor und nach einer Validierung bzw. Änderung der Werte.

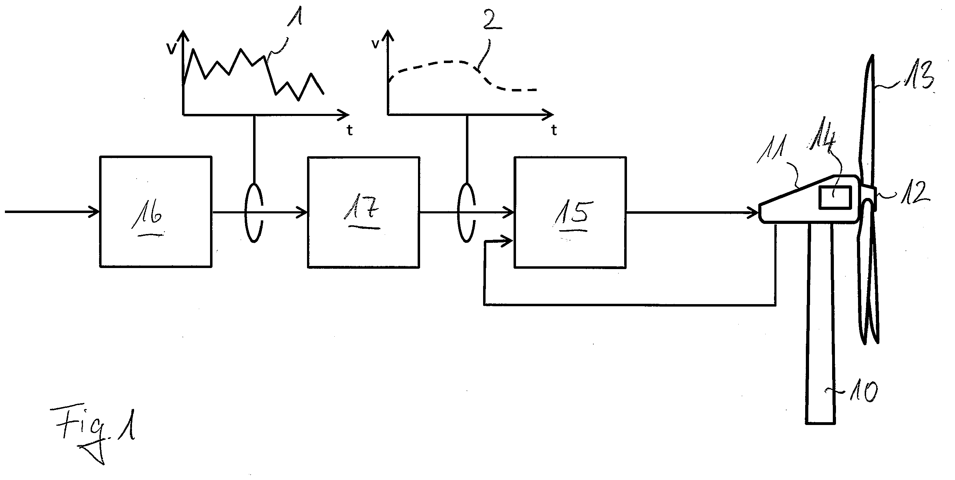

**Fig. 1** zeigt ein erstes Beispiel einer Windenergieanlage 10 bis 14 mit einer aus Anschaulichkeitsgründen vergrößert dargestellten Vorrichtung 15 bis 17 zum Betreiben der Windenergieanlage. Die nur schematisch dargestellte Windenergieanlage weist eine auf einem Turm 10 um eine vertikale Achse verschwenkbare Gondel 11 auf, an welcher ein Rotor 12 mit Rotorblättern 13 drehbar gelagert ist. Ein Generator 14, der sich im vorliegenden Beispiel in der Gondel 11 befindet, ist mit dem Rotor 12 mechanisch gekoppelt und wandelt die dabei übertragene Rotationsenergie in elektrische Energie um.

Ferner ist ein Regelungssystem 15 vorgesehen, welches dazu eingerichtet ist, eine oder mehrere Betriebsparameter der Windenergieanlage einzustellen und/oder zu regeln. Bei den einzustellenden Betriebsparametern bzw. den zugehörigen Regelgrößen handelt es sich beispielsweise um den Rotorblattwinkel wenigstens eines Rotorblattes 13, das Generatordrehmoment und/oder die Abgabeleistung des Generators 14 und/oder den Windnachführwinkel, welcher auch als Azimutwinkel bezeichnet wird und sich auf die Orientierung der Gondel 11 relativ zur Windrichtung bezieht.

Zur Regelung der Leistung der Windenergieanlage 10 bis 14 werden vorzugsweise der Rotorblattwinkel sowie das Drehmoment des Generators 14 als Stell- bzw. Regelgrößen verwendet. Das Drehmoment ist dabei vorzugsweise über eine Generator- und/oder Umrichter-Steuerung (nicht dargestellt), je nach verwendetem Generatorsystem, einstellbar. Die jeweilige Leistung ergibt sich, da sich eine Drehzahl unter den gegebenen Randbedingungen, nämlich Wind, Rotorblattwinkel und Drehmoment, einstellt. Damit setzt eine Vorgabe der jeweiligen Leistung des Generators 14 bzw. der Windenergieanlage 10 bis 14 in der Regel die Einstellung des Drehmoments und Rotorblattwinkels voraus. Dennoch wird im Kontext mit der vorliegenden Offenbarung die vom Generator 14 bzw. der Windenergieanlage 10 bis 14 abgegebene Leistung selbst als Regelgröße betrachtet, welche bzw. deren Sollwert ermittelt und/oder eingestellt wird.

Das Regelungssystem 15 ist vorzugsweise dazu eingerichtet, das Verhalten der Windenergieanlage mittels geeigneter Stelleingriffe, beispielsweise hinsichtlich Generatordrehmoment und/oder Rotorblattwinkel, zu optimieren. Dazu weist das Regelungssystem 15 vorzugsweise einen modellprädiktiven Regler (MPC) auf, durch welchen mit Hilfe eines zeitdiskreten dynamischen Modells der Windenergieanlage deren zukünftiges Verhalten simuliert und durch Einstellen der mit Hilfe eines Optimierungsalgorithmus gewonnenen Regelgrößen bzw. der entsprechenden Sollwerte optimiert werden kann.

Vorzugsweise werden die Regelgrößen bzw. Sollwerte und/oder vorzunehmenden Stelleingriffe unter Berücksichtigung aktueller Regelgrößen der Windenergieanlage einerseits und einer für einen bestimmten Zeitraum in der Zukunft getroffenen Prognose der Windverhältnisse im Bereich der Windenergieanlage andererseits ermittelt. Vorzugsweise wird das Verhalten der Windenergieanlage durch den MPC-Regler dabei durch geeignete Stelleingriffe unter der Annahme optimiert, dass sich die Windverhältnisse so einstellen, wie diese prognostiziert wurden.

Die Bestimmung einer Prognose von Werten eines oder mehrerer Windparameter und deren Validierung und/oder Änderung wird im Folgenden näher erläutert, wobei als Windparameter beispielhaft die Windgeschwindigkeit betrachtet wird. Grundsätzlich gelten die folgenden Erläuterungen entsprechend aber auch für andere Windparameter, die zusätzlich oder alternativ zur Windgeschwindigkeit prognostiziert und validiert werden können, wie etwa die Windrichtung, die Windturbulenz oder Parameter zur Beschreibung der vorliegenden Windturbulenz wie Korrelationskoeffizienten und Längenmaßstäbe, ein vertikaler oder horizontaler Windgradient, eine Windscherung, eine Häufigkeitsverteilung der Windgeschwindigkeit und deren Charakterisierung durch den sog. Weibull-Skalierungsfaktor A und/oder Weibull-Formparameter k (Weibull-Parameter) sowie auch die Energieflussdichte in W/m².

In einer Prognoseeinrichtung 16 werden zunächst Werte der in der Vergangenheit, insbesondere im Bereich der Windenergieanlage, herrschenden Windgeschwindigkeit eingelesen. Bei den eingelesenen Werten kann es sich beispielsweise um unmittelbar, etwa mittels einer Windmesseinrichtung, erfasste Werte der Windgeschwindigkeit oder aber auch um Werte handeln, die aus erfassten Betriebsgrößen der Windenergieanlage abgeleitet bzw. geschätzt werden, beispielsweise aus der Abgabeleistung, der Drehzahl und/oder dem Rotorblattwinkel. Vorzugsweise handelt es sich bei den eingelesenen Werten der Windgeschwindigkeit um Werte, die in einem in der Vergangenheit liegenden und ggf. bis zur Gegenwart laufenden Zeitraum mit einer Dauer zwischen etwa 20 und 100 Sekunden in einem zeitlichen Abstand von etwa 1 Sekunde erfasst bzw. geschätzt wurden.

Auf der Basis der eingelesenen Werte der Windgeschwindigkeit nimmt die Prognoseeinrichtung 16 eine Prognose von Werten der Windgeschwindigkeit für einen in der Zukunft liegenden Zeitraum vor. Dies wird vorzugsweise mit Hilfe eines neuronalen Netzwerks erreicht, welches vorzugsweise in einem separaten Lernvorgang konfiguriert worden ist und/oder aber auch so ausgelegt sein kann, dass es während der Durchführung des erfindungsgemäßen Verfahrens adaptiert und/oder ständig weiter trainiert wird.

Vorzugsweise ist die Prognoseeinrichtung 16 dazu eingerichtet, Werte der Windgeschwindigkeit für einen in der Zukunft liegenden Zeitraum mit einer Dauer von etwa 15 Sekunden in Schritten von beispielsweise einer Sekunde zu prognostizieren. Vorzugsweise wird eine solche Prognose in regelmäßigen zeitlichen Intervallen, beispielsweise jede Sekunde, wiederholt bzw. aktualisiert (gleitender Horizont), um stets auch die jeweils aktuell erfassten bzw. geschätzten Werte der Windgeschwindigkeit bei der Prognose berücksichtigen zu können.

Ein Beispiel eines prognostizierten Verlaufs 1 von Werten der Windgeschwindigkeit v über der Zeit t ist in Fig. 1 dargestellt.

Da die Werte vorzugsweise mittels eines neuronalen Netzwerks prognostiziert wurden, ist nicht auszuschließen, dass darin einzelne oder mehrere Werte und/oder Wertschwankungen enthalten sind, die bei einem realistischen Szenario der Windverhältnisse aller Wahrscheinlichkeit nach nicht zu erwarten sind oder die zwar als Extremereignis zu erwarten sind, für die das nachgeschaltete Regelsystem nicht ausgelegt ist, sodass es besser ist, eine Abschwächung des Ereignisses in den Regler zu geben, um ein stabiles und akzeptables Regelverhalten zu erzielen. Um solche Werte bzw. Wertschwankungen zu identifizieren, werden die von der Prognoseeinrichtung 16 prognostizierten Werte der Windgeschwindigkeit einer Validierungseinrichtung 17 zugeführt, in welcher diese anhand bestimmter Kriterien geprüft und/oder mittels bestimmter Regeln geändert werden. Dabei werden vorzugsweise deterministische Kriterien bzw. Regeln auf die prognostizierten Werte angewandt, um diese insbesondere um extreme Werte und/oder Wertschwankungen zu bereinigen.

Ein Beispiel eines dabei erhaltenen Verlaufs 2 der Werte der Windgeschwindigkeit v über der Zeit t ist ebenfalls in Fig. 1 dargestellt.

Die erhaltenen validierten und geänderten Werte der Windgeschwindigkeit v zeigen in diesem Beispiel einen gegenüber dem Verlauf 1 der prognostizierten Werte glatteren Verlauf 2, da bei der Validierung und Änderung des prognostizierten Verlaufs 1 größere Schwankungen der Werte verringert wurden.

Der auf diese Weise erhaltene zeitliche Verlauf 2 der prognostizierten und validierten bzw. geänderten Werte der Windgeschwindigkeit v wird, neben den jeweils aktuellen Regelgrößen der Windenergieanlage, im Regelungssystem 15 bei der Ermittlung der Sollwerte einer oder mehrerer Regelgrößen bzw. bei der Durchführung entsprechender Stelleingriffe berücksichtigt.

Im Vergleich zu derzeit verfügbaren Windmessmethoden mittels LIDAR, welche nur bedingt verlässliche Messungen für die gesamte Rotorfläche mit typischen Durchmessern zwischen 130 und 200 m liefern, kann der vorliegend offenbarte Ansatz, obwohl dieser auf einer Prognose der Windparameter basiert, zu besseren Ergebnissen führen.

Im Beispiel der Fig. 1 werden die in der Prognoseeinrichtung 16 prognostizierten Werte beispielhaft einer Glättung unterzogen. Grundsätzlich ist es aber möglich, einzelne Werte und/oder den zeitlichen Verlauf 1 der prognostizierten Werte jeder beliebigen Validierung, Überprüfung, Plausibilitätsprüfung und/oder Änderung oder "Bereinigung" zu unterziehen, um extreme und/oder unrealistische Werte der Windgeschwindigkeit v zu identifizieren bzw. anzupassen. Im Folgenden werden beispielhaft verschiedene Möglichkeiten der Validierung bzw. Änderung oder Bereinigung der prognostizierten Werte dargestellt.

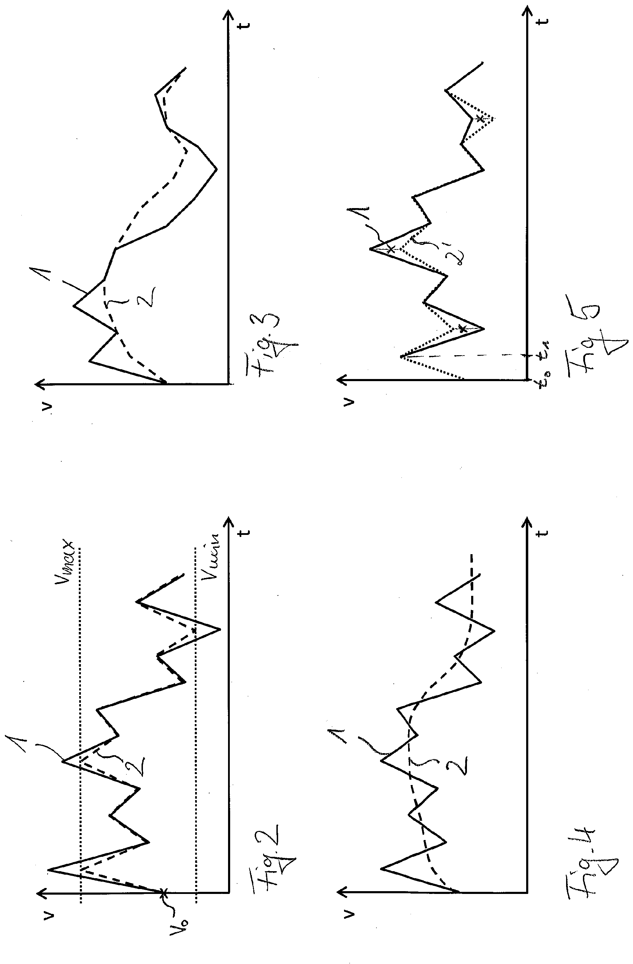

**Fig. 2** zeigt ein erstes Beispiel des zeitlichen Verlaufs von prognostizierten Werten 1 der Windgeschwindigkeit vor und nach einer Validierung bzw. Änderung der Werte. Im vorliegenden Beispiel werden die prognostizierten Werte 1 mit einer vorgegebenen maximalen Windgeschwindigkeit vₘₐₓ und einer vorgegebenen minimalen Windgeschwindigkeit vₘᵢₙ verglichen, wobei Werte, die über bzw. unter der vorgegebenen maximalen bzw. minimalen Windgeschwindigkeit liegen (sog. Ausreißer), reduziert bzw. angehoben werden. Beispielsweise kann als minimale Windgeschwindigkeit eine Windgeschwindigkeit von 2 m/s und als maximale Windgeschwindigkeit eine Geschwindigkeit von 32 m/s angenommen werden. Vorzugsweise wird der betreffende Ausreißer dann auf den jeweils vorgegebenen Wert vₘₐₓ bzw. vₘᵢₙ gesetzt. Die Werte der Ausreißer können aber auch auf andere als die vorgegebenen maximalen bzw. minimalen Windgeschwindigkeitswerte gesetzt oder aber auch ganz eliminiert bzw. durch Interpolation zwischen den angrenzenden Werten ersetzt werden.

Nach einer Änderung der Ausreißer im Verlauf 1 der prognostizierten Werte wird ein entsprechend geänderter Verlauf 2 der Werte erhalten, welcher bei der Ermittlung der Sollwerte der Regelgrößen herangezogen wird.

Anstelle von vorgegebenen absoluten Maximal- bzw. Minimalwerten der Windgeschwindigkeit kann auch eine Begrenzung der prognostizierten Werte relativ zur jeweils aktuellen Windgeschwindigkeit v₀ vorgegeben werden. Beispielsweise kann die vorgegebene maximale Windgeschwindigkeit vₘₐₓ dabei der Summe aus der aktuell gemessenen bzw. geschätzten Windgeschwindigkeit v₀ und einem vorgegebenen Absolutwert, wie zum Beispiel 4 m/s, errechnet werden. Entsprechendes gilt für die vorgegebene minimale Windgeschwindigkeit vₘᵢₙ. Alternativ ist es auch möglich, die maximale und/oder minimale vorgegebene Windgeschwindigkeit durch Multiplikation der aktuellen Windgeschwindigkeit v₀ mit einem vorgegebenen Faktor zu ermitteln. Grundsätzlich ist es auch möglich, dass die vorgegebene maximale und/oder minimale Windgeschwindigkeit vₘₐₓ bzw. vₘᵢₙ nicht zu allen Zeitpunkten t gleich hoch sein muss, sondern vielmehr mit der Zeit t unterschiedlich hoch sein kann. Beispielsweise kann die vorgegebene maximale Windgeschwindigkeit vₘₐₓ eine positive lineare oder parabelförmige Steigung (Anstieg mit der Zeit t) aufweisen. Entsprechend kann die vorgegebene minimale Windgeschwindigkeit v eine negative lineare oder parabelförmige Steigung (Abfall mit der Zeit t) aufweisen. Auf diese Weise lässt sich der "Spielraum" von weiter in der Zukunft liegenden Werten der Windgeschwindigkeit v gezielt vergrößern, um durchaus realistische Schwankungen der Werte nach oben bzw. unten nicht gänzlich auszuschließen.

**Fig. 3** zeigt ein zweites Beispiel von prognostizierten Werten der Windgeschwindigkeit v vor und nach einer Validierung bzw. Änderung der Werte, bei welcher die zeitliche Änderung der prognostizierten Werte der Windgeschwindigkeit v nach oben und/oder unten hin begrenzt wird. Dies wird vorzugsweise durch Vorgabe einer Änderungsrate erreicht, durch welche die maximal zulässige zeitliche Änderung der Werte definiert wird. Dadurch lassen sich sowohl Schwankungen der prognostizierten Windgeschwindigkeit in einer Richtung des Windes begrenzen, d.h. zu größeren bzw. kleineren Geschwindigkeiten hin, als auch das Ausmaß eines eventuellen Wechsels der Windrichtung, d.h. von positiven zu negativen Werten der Windgeschwindigkeit und umgekehrt.

Im dargestellten Beispiel der Fig. 3 wird dadurch der Verlauf 1 der prognostizierten Werte dahingehend angepasst, dass bestimmte Werte, die gegenüber einem oder mehreren vorausgegangenen Werten stärker zunehmen als die vorgegebene Änderungsrate dies spezifiziert, verringert bzw. erhöht, so dass ein Verlauf 2 der Werte mit geringeren Anstiegen bzw. Gefällen erhalten wird.

**Fig. 4** zeigt ein drittes Beispiel von prognostizierten Werten der Windgeschwindigkeit vor und nach einer Validierung bzw. Änderung der Werte, bei welcher der Verlauf 1 der prognostizierten Werte der Windgeschwindigkeit v geglättet wird, so dass ein entsprechend geglätteter Verlauf 2 erhalten wird. Dabei werden insbesondere höherfrequente Anteile im Verlauf 1 der Werte eliminiert. Dies kann beispielsweise durch Bildung gleitender Mittelwerte erfolgen oder aber auch durch Anwendung eines Filters, beispielsweise eines Tiefpassfilters. Ähnlich zu der vorstehend beschriebenen Ratenbegrenzung der zeitlichen Änderung der prognostizierten Werte wird auch im vorliegenden Beispiel ein Verlauf 2 der entsprechend geänderten Werte der Windgeschwindigkeit erhalten, welcher weniger Schwankungen bzw. Ausreißer nach oben bzw. unten enthält.

**Fig. 5** zeigt ein viertes Beispiel von prognostizierten Werten der Windgeschwindigkeit vor und nach einer Validierung bzw. Änderung der Werte, bei welcher der prognostizierte Verlauf 1 der Werte der Windgeschwindigkeit anhand eines Vergleichs mit dem Verlauf 2' der bei einer früheren Vorhersage prognostizierten und gegebenenfalls geänderten Werte der Windgeschwindigkeit begrenzt wird. Im dargestellten Beispiel weicht der Verlauf 1 der zum Zeitpunkt t₁ getroffenen Prognose an einigen Stellen von dem zu einem früheren Zeitpunkt t₀ ermittelten Verlauf 2' ab. Um die Konsistenz der Verläufe 1 und 2' zu erhöhen, können zum Beispiel einzelne prognostizierte Werte im Verlauf 1 beispielsweise in Richtung der entsprechenden Werte im zuvor prognostizierten Verlauf 2' erhöht bzw. verringert werden, wie dies in der Fig. 5 durch die eingezeichneten Punkte x beispielhaft angedeutet ist. Grundsätzlich ist es auch möglich, das Maß der jeweils vorgegebenen Anpassung von der Zeit t abhängig zu machen. So kann beispielsweise vorgesehen sein, Abweichungen im prognostizierten Verlauf 1 gegenüber dem früher prognostizierten Verlauf 2' deutlicher zu verringern, wenn diese bei Werten auftreten, die für frühere Zeitpunkte der Prognose, beispielsweise zwischen 1 und 7 Sekunden, auftreten, als bei Werten, die für spätere Zeitpunkte, beispielsweise über 7 Sekunden, ermittelt wurden.

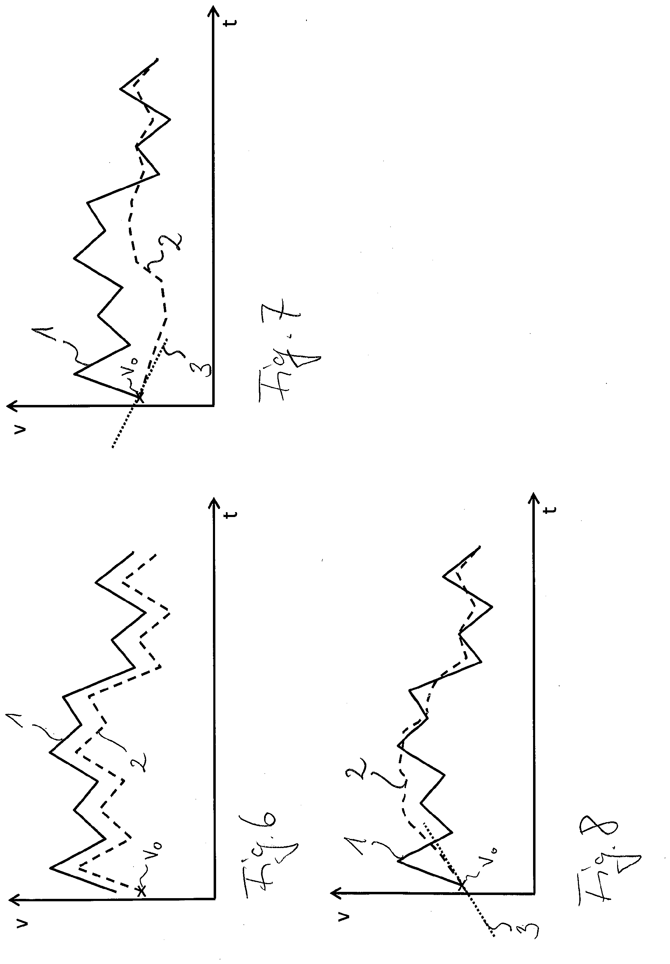

**Fig. 6** zeigt ein fünftes Beispiel von prognostizierten Werten der Windgeschwindigkeit v vor und nach einer Validierung bzw. Änderung der Werte, bei welcher der Verlauf 1 der prognostizierten Werte der Windgeschwindigkeit v an den jeweils aktuell gemessenen bzw. geschätzten Wert v₀ der Windgeschwindigkeit angepasst wird. Im vorliegenden Beispiel liegt der aktuelle Wert v₀ der Windgeschwindigkeit etwas unterhalb des für diesen Zeitpunkt prognostizierten Wertes. Um den zunächst prognostizierten Verlauf 1 der Werte der Windgeschwindigkeit an den aktuellen Wert v₀ anzupassen, wird der Verlauf 1 zu niedrigeren Werten der Windgeschwindigkeit hin verschoben, bis dessen Beginn mit dem aktuellen Wert v₀ der Windgeschwindigkeit übereinstimmt. Dadurch wird der in der Fig. 6 eingezeichnete Verlauf 2 der entsprechend angepassten Werte der Windgeschwindigkeit erhalten.

**Fig. 7** zeigt ein sechstes Beispiel von prognostizierten Werten der Windgeschwindigkeit vor und nach einer Validierung bzw. Änderung der Werte, bei welcher der Verlauf 1 der prognostizierten Werte der Windgeschwindigkeit an den zu Beginn des Prognosezeitraums vorliegenden Gradienten im zeitlichen Verlauf der gemessenen bzw. geschätzten Werte der Windgeschwindigkeit angepasst wird. Im vorliegenden Beispiel ist der mittels einer Geraden 3 veranschaulichte Gradient im aktuell gemessenen bzw. geschätzten Wert v₀ der Windgeschwindigkeit negativ. Dies bedeutet zum Beispiel, dass der aktuelle Wert v₀ gegenüber einem oder mehreren der zuvor gemessenen bzw. geschätzten Werte (nicht dargestellt) der Windgeschwindigkeit abnimmt und/oder der aktuelle Wert v₀, gegebenenfalls zusammen mit den zuvor gemessenen bzw. geschätzten Werten, einen zumindest vorübergehenden Abwärtstrend der Windgeschwindigkeit vorgibt bzw. vorgeben. Um nun die jeweils aktuelle Prognose der Werte der Windgeschwindigkeit an diesen Trend anzupassen, werden die Werte und/oder Gradienten im zeitlichen Verlauf 1 der prognostizierten Werte an diesen Gradienten angepasst. Vorzugsweise ist dabei die Anpassung von Werten für frühere Zeitpunkte der Prognose, beispielsweise für Zeitpunkte innerhalb der nächsten 7 Sekunden, stärker ist als bei Werten, die für spätere Zeitpunkte, beispielsweise oberhalb von 7 Sekunden, der Prognose erhalten werden. Der auf diese Weise erhaltene Verlauf 2 der entsprechend angepassten Werte der Windgeschwindigkeit weicht daher im vorliegenden Beispiel zu Beginn des Prognosezeitraums stärker vom ursprünglich prognostizierten Verlauf 1 ab und nähert sich gegen Ende des Prognosezeitraums wieder mehr dem prognostizierten Verlauf 1.

**Fig. 8** zeigt ein siebtes Beispiel von prognostizierten Werten der Windgeschwindigkeit v vor und nach einer Validierung bzw. Änderung der Werte, bei welcher analog zu dem in Fig. 7 gezeigten Beispiel eine Anpassung des Verlaufs 1 der prognostizierten Werte der Windgeschwindigkeit an den Gradienten im jeweils aktuell gemessenen bzw. geschätzten Wert v₀ der Windgeschwindigkeit vorgenommen wird. Anders als bei dem in Fig. 7 gezeigten Beispiel ist vorliegend der Gradient im aktuellen Wert v₀ der Windgeschwindigkeit jedoch positiv, was durch die Gerade 3 veranschaulicht wird. Nach Anpassung der Werte bzw. Gradienten der Werte im ursprünglich prognostizierten Verlauf 1 wird der beispielhaft eingezeichnete Verlauf 2 der Werte erhalten.

Bei der Anpassung des jeweils prognostizierten Verlaufs 1 in den Beispielen der Figuren 7 und 8 an den jeweils im aktuellen Wert v₀ der Windgeschwindigkeit vorliegenden Gradienten kann beispielsweise eine von der Zeit t abhängige Gewichtung vorgenommen werden, indem zum Beispiel die Werte einer Funktion der Geraden 3 mit einem Gewichtungsfaktor, welcher beispielsweise zwischen 1 und 0 liegt, multipliziert und mit den prognostizierten Werten des Verlaufs 1 jeweils kombiniert werden, beispielsweise durch Addition oder Subtraktion, je nach Vorzeichen des Gradienten im aktuellen Wert und/oder Vorzeichen der jeweiligen Abweichung.

Insgesamt wird durch die im Zusammenhang mit den Figuren 7 und 8 vorgenommene Anpassung des Verlaufs der prognostizierten Werte an den aktuell gegebenen Gradienten erreicht, dass der Verlauf 2 der dabei erhaltenen geänderten Werte der Windgeschwindigkeit v eine höhere Konsistenz mit dem aktuellen bzw. vorausgegangenen Trend in der Entwicklung der Windgeschwindigkeit v aufweist.

Grundsätzlich ist es möglich, die im Zusammenhang mit den Figuren 2 bis 8 erläuterten Ansätze zur Validierung und/oder Änderung der prognostizierten Werte jeweils einzeln anzuwenden, um eine vorteilhafte Validierung bzw. Bereinigung der jeweils prognostizierten Werte zu erreichen. Es ist aber auch möglich, einzelne Schritte der Validierung und/oder Änderung der prognostizierten Werte miteinander zu kombinieren. Dabei kann es vorteilhaft sein, die vorstehend beschriebenen unterschiedlichen Methoden in einer vorgegebenen Reihenfolge miteinander zu kombinieren, wobei die validierten und gegebenenfalls geänderten Werte, die mit einer ersten Methode erhalten wurden, als Eingangswerte einer nachfolgend durchgeführten zweiten Methode der Validierung bzw. Änderung dienen und somit - im Sinne der vorliegenden Offenbarung - als "prognostizierte Werte" angesehen werden, die einen Verlauf 1 aufweisen und durch Anwendung der zweiten Methode validiert bzw. geändert werden, wodurch ein Verlauf 2 erhalten wird, usw..

## Patentansprüche

1. Verfahren zum Betreiben einer Windenergieanlage (10-15), welche ein Regelungssystem (15) zur Einstellung mindestens einer der folgenden Regelgrößen der Windenergieanlage aufweist: Rotorblattwinkel, Generatordrehmoment, Abgabeleistung und/oder Windnachführwinkel, mit folgenden Schritten:
- Einlesen von Werten mindestens eines den Wind im Bereich der Windenergieanlage charakterisierenden Windparameters (v),
- Bestimmung einer Prognose eines oder mehrerer Werte (1) des Windparameters (v) für einen in der Zukunft liegenden Zeitraum basierend auf den eingelesenen Werten des Windparameters (v),
- Validierung und/oder Änderung mindestens eines der prognostizierten Werte (1) des Windparameters (v) und
- Ermitteln mindestens eines Sollwertes mindestens einer der Regelgrößen basierend auf dem mindesten einen validierten und/oder geänderten prognostizierten Wert (2) des Windparameters (v).

2. Verfahren nach Anspruch 1, wobei die Bestimmung der Prognose der Werte (1) des Windparameters (v) mittels eines neuronalen Netzwerks erfolgt.

3. Verfahren nach Anspruch 2, wobei das neuronale Netzwerk mittels eines separaten Lernverfahrens auf der Basis von Werten des Windparameters (v) für mindestens einen in der Vergangenheit liegenden Zeitraum konfiguriert wurde und/oder das, insbesondere bereits konfigurierte, neuronale Netzwerk während des Betriebs der Windenergieanlage anhand des mindestens einen validierten und/oder geänderten prognostizierten Wertes (2) des Windparameters (v) angepasst wird.

4. Verfahren nach Anspruch 1, wobei die Bestimmung der Prognose der Werte (1) des Windparameters (v) mittels einer Markov-Kette auf der Basis von Werten des Windparameters (v) für mindestens einen in der Vergangenheit liegenden Zeitraum erfolgt.

5. Verfahren nach einem der vorangehenden Ansprüche, wobei die Validierung und/oder Änderung des mindestens einen der prognostizierten Werte (1) des Windparameters (v) durch Anwendung mindestens einer deterministischen Regel erfolgt.

6. Verfahren nach einem der vorangehenden Ansprüche, wobei die Validierung und gegebenenfalls Änderung des mindestens einen der prognostizierten Werte (1) des Windparameters (v) erfolgt, indem der mindestens eine prognostizierte Wert (1) des Windparameters (v) mit mindestens einem absoluten Grenzwert (vₘᵢₙ, vₘₐₓ) verglichen wird und, falls der prognostizierte Wert (1) den absoluten Grenzwert (vₘᵢₙ, vₘₐₓ) überschreitet oder unterschreitet, der prognostizierte Wert (1) geändert wird.

7. Verfahren nach einem der vorangehenden Ansprüche, wobei die Validierung und gegebenenfalls Änderung des mindestens einen der prognostizierten Werte (1) des Windparameters (v) erfolgt, indem der mindestens eine prognostizierte Wert (1) des Windparameters (v) mit mindestens einem relativen Grenzwert verglichen wird, welcher sich auf einen aktuellen Wert (v₀) des Windparameters (v) oder auf einen bei einer vorherigen Prognose bestimmten und validierten und gegebenenfalls geänderten Wert des Windparameters (v) bezieht, und, falls der prognostizierte Wert den relativen Grenzwert überschreitet oder unterschreitet, der prognostizierte Wert (1) geändert wird.

8. Verfahren nach einem der vorangehenden Ansprüche, wobei die Validierung und gegebenenfalls Änderung des mindestens einen der prognostizierten Werte (1) des Windparameters (v) erfolgt, indem die Änderungsrate der prognostizierten Werte (1) des Windparameters (v) mit einer vorgegebenen Änderungsrate verglichen wird und, falls die Änderungsrate der prognostizierten Werte (1) die vorgegebene Änderungsrate in einem Zeitfenster überschreitet, mindestens ein in dem Zeitfenster liegender prognostizierter Wert (1) geändert wird.

9. Verfahren nach einem der vorangehenden Ansprüche, wobei die Validierung und Änderung des mindestens einen der prognostizierten Werte (1) des Windparameters (v) erfolgt, indem die prognostizierten Werte (1) des Windparameters (v) einer Glättung und/oder Filterung unterzogen werden.

10. Verfahren nach einem der vorangehenden Ansprüche, wobei die Validierung und gegebenenfalls Änderung des mindestens einen der prognostizierten Werte (1) des Windparameters (v) erfolgt, indem die für einen ersten Zeitraum prognostizierten ersten Werte (1) des Windparameters (v) mit einem Teil der für einen zweiten Zeitraum, welcher vor dem ersten Zeitraum beginnt und mit dem ersten Zeitraum teilweise überlappt, prognostizierten und gegebenenfalls validierten bzw. geänderten zweiten Werte (2') verglichen werden und, falls einer der ersten Werte (1) eine Abweichung vom entsprechenden zweiten Wert (2') aufweist, welche größer ist als eine vorgegebene Abweichung, der erste Wert (1) geändert wird.

11. Verfahren nach einem der vorangehenden Ansprüche, wobei die Validierung und Änderung des mindestens einen der prognostizierten Werte (1) des Windparameters (v) erfolgt, indem die für den Zeitraum prognostizierten Werte (1) des Windparameters (v) so geändert werden, dass der am Anfang des Zeitraums liegende geänderte Wert des Windparameters im Wesentlichen dem aktuell eingelesenen Wert (v₀) des Windparameters (v) entspricht.

12. Verfahren nach einem der vorangehenden Ansprüche, wobei die Validierung und Änderung des mindestens einen der prognostizierten Werte (1) des Windparameters (v) erfolgt, indem die für den Zeitraum prognostizierten Werte (1) des Windparameters (v) so geändert werden, dass der Gradient des zeitlichen Verlaufs der geänderten Werte (2) des Windparameters (v) am Anfang des Zeitraums im Wesentlichen dem Gradienten (3) des zeitlichen Verlaufs zumindest eines Teils der eingelesenen Werte, welche den aktuell eingelesenen Wert (v₀) des Windparameters (v) enthalten, entspricht.

13. Verfahren nach einem der vorangehenden Ansprüche, wobei der mindestens eine Sollwert mittels eines modellprädiktiven Reglers (MPC) ermittelt wird.

14. Vorrichtung (16, 17) zum Betreiben einer Windenergieanlage (10-15), welche ein Regelungssystem (15) zur Einstellung mindestens einer der folgenden Regelgrößen der Windenergieanlage aufweist: Rotorblattwinkel, Generatordrehmoment, Abgabeleistung und/oder Windnachführwinkel, wobei die Vorrichtung mindestens eine Ermittlungseinrichtung (16, 17) aufweist, welche zur Durchführung folgender Schritte eingerichtet ist:
- Einlesen von Werten mindestens eines den Wind im Bereich der Windenergieanlage charakterisierenden Windparameters (v),
- Bestimmung einer Prognose eines oder mehrerer Werte (1) des Windparameters (v) für einen in der Zukunft liegenden Zeitraum basierend auf den eingelesenen Werten des Windparameters (v),
- Validierung und/oder Änderung mindestens eines der prognostizierten Werte (1) des Windparameters (v) und
- Ermitteln mindestens eines Sollwertes mindestens einer der Regelgrößen basierend auf dem mindesten einen validierten und/oder geänderten prognostizierten Wert (2) des Windparameters (v).

15. Windenergieanlage mit
- mehreren Rotorblättern (13), einer Gondel (11) und einem Generator (14),
- einer Vorrichtung (16, 17) nach dem vorangehenden Anspruch und
- einem Regelungssystem (15), welches dazu eingerichtet ist, mindestens eine der folgenden Regelgrößen basierend auf dem ermittelten Sollwert einzustellen: einen Rotorblattwinkel mindestens eines der Rotorblätter (13), ein Drehmoment des Generators (14), eine vom Generator (14) abgegebene Leistung und/oder einen Windnachführwinkel der Gondel (11).
